Europäisches Patentamt

European Patent Office

Office européen des brevets

(11) Publication number: **0 020 118**
A1

## (12) EUROPEAN PATENT APPLICATION

(21) Application number: **80301736.7**

(22) Date of filing: **23.05.80**

(51) Int. Cl.³: **G 09 B 13/02,** G 09 B 15/08, **H 01 H 13/70**

(30) Priority: **24.05.79 US 42077**

(43) Date of publication of application: **10.12.80 Bulletin 80/25**

(84) Designated Contracting States: **CH DE FR GB IT LI**

(71) Applicant: **Crimmins, Arthur G., 301D Willowbrook Road, Morristown Pennsylvania 19401 (US)**

(72) Inventor: **Crimmins, Arthur G., 301D Willowbrook Road, Morristown Pennsylvania 19401 (US)**

(74) Representative: **Wright, Peter D.J. et al, R.G.C. Jenkins & Co. Chancery House 53-64 Chancery Lane, London WC2A 1QU (GB)**

(54) **Finger control system.**

(57) The invention is a method and apparatus for utilizing finger control switches (SW1 to SW10) connected to a binary code receiver for the purpose of driving a printer and/or a visual and/or audible readout device. The device is made up of a number of switches normally in the open position which can be depressed to a closed position. The input from the switches is communicated to a binary code receiver, which activates a printer, a visual readout or an audible device. The finger buttons (of solenoids Sol-1 to Sol-10) for operating the switches can also be operated electrically, for example from a suitably programmed central processor, so as to transmit to an operator's fingers desired switch operating combinations for teaching purposes. The apparatus is used both for communication to other equipment and as a teaching device for physically demonstrating the combination of switch positions required to produce a given command.

FINGER CONTROL SYSTEM

This invention relates to an apparatus and method of controlling any equipment capable of accepting commands from a binary code receiver. The invention is adapted to both train an operator and to transmit the input of an operator to a number of devices such as a typewriter, musical instrument or any equipment requiring instructions such as a helicopter, an airplane, and the like.

A number of prior art devices are known.

U.S. Patent No. 3,166,856 to W.R. Uttal describes an educational device for the teaching of touch typing. It involves a pair of gloves which the operator puts on his hands and through contacts located in the fingertips, which match contacts located in the keyboard, the student is enabled to close a circuit when his fingertips touch the correct key on a typewriter keyboard. This will allow the key to be depressed and the letter to be struck on the typewriter. The device does not teach in the sense of directing the operator's fingers through the correct sequence of operation but teaches in the sense that unless the correct key is struck, there is no response from the instrument.

U.S. Patent 3,277,587 to R.L. Holcombe describes a tactile training system in which a signal from loops on the finger of an instructor is transmitted to a solenoid or vibrator on each of the fingers of a student. The device is limited to teaching a person which finger should be used on a keyboard. However, the device does not show which key on the keyboard is to be depressed except by a visual representation. The student must look for the key on his keyboard.

Maling, in U.S. Patent 3,693,184, describes a typewriting apparatus which is adapted to generate signals corresponding to predetermined coded verbal data. By depressing a particular key, an operator is enabled to print out an entire word rather than a particular character. This device has no provision for feedback or training the operator in its operation.

U.S. Patent 3,831,296 to Edward D. Hagle describes a method for communicating with blind or deaf persons. It involves a pair of gloves with a multiplicity of sensors located along the fingers and enables a party with the appropriate keyboard to communicate with a person who is deaf and blind.

U.S. Patent 4,055,905 issued to G.R. Budrose involves another touch-type teaching device which sensors are placed inside of gloves which are worn over the fingers of the operator. Each finger has a conductive pad which completes the circuit on contact with a key. Touching the wrong key will inhibit the circuit and prevent the key from being depressed.

None of the above inventions combine the function of providing a tactile signal to an operator which, at the same time, shows him which finger to use and the particular key or button to depress on a keyboard. In addition, none of the above devices combine the above tactile teaching system with a means of generating more than one letter or note.

The present invention in its apparatus aspect is a device which involves the manipulation of ten switches which have two modes, e.g., an on and off position, and are, therefore, adapted to the production of binary code sequences containing $2^{10}$ commands or 1023 commands. The switches are manipulated either manually by an operator who pushes one or more solenoid armatures placed over the switches into contact with the switches thereby closing them or electrically by a signal sent from a computer to one or more solenoid coils. When the coil is activated, it generates a magnetic field which forces the armature in contact with a switch and closes it.

- 4 -

The binary code receiver accepts the sequence of signals from the switches and translates them according to the computer program embodied in its system. The binary code receiver also passes signals on to a visual display or printer or to a mechanical device such as a typewriter, motor vehicle, helicopter and the like.

In the teaching method aspect of the invention, signals are sent from a teaching system to the solenoids which thereby act on the armature and manipulate the switches in the desired sequence. A corresponding signal is also sent to the binary receiver which transmits the coded information to audio or visual communication devices. The operator has his hands on the armatures and can feel which switches are moved. In the next phase, the student is required to repeat the prior sequence communicated to him tactually and/or visually and/or audibly. Successful duplication of the sequence is communicated to the operator by the communication devices. Unsuccessful duplication of the sequence is also communicated to the student by the same means and the correct sequence is again repeated by the system. The student again attempts to duplicate the sequence. This process continues until the operator is taught the correct order of sequences required.

- 5 -

The teaching method can be combined to include both visual and audible indications of the correct and incorrect operation of the switches.

The invention will be better understood from the following description of preferred embodiments with reference to the accompanying drawings, in which:

Figure 1 diagrammatically illustrates a finger control system for generating symbols or words;

Figure 2 is a cross-sectional view taken along line 2-2 of Figure 1 illustrating a typical solenoid 10; and

Figure 3 is a schematic illustration showing the relationship between the switches, teaching system, binary receiver and the equipment to be commanded.

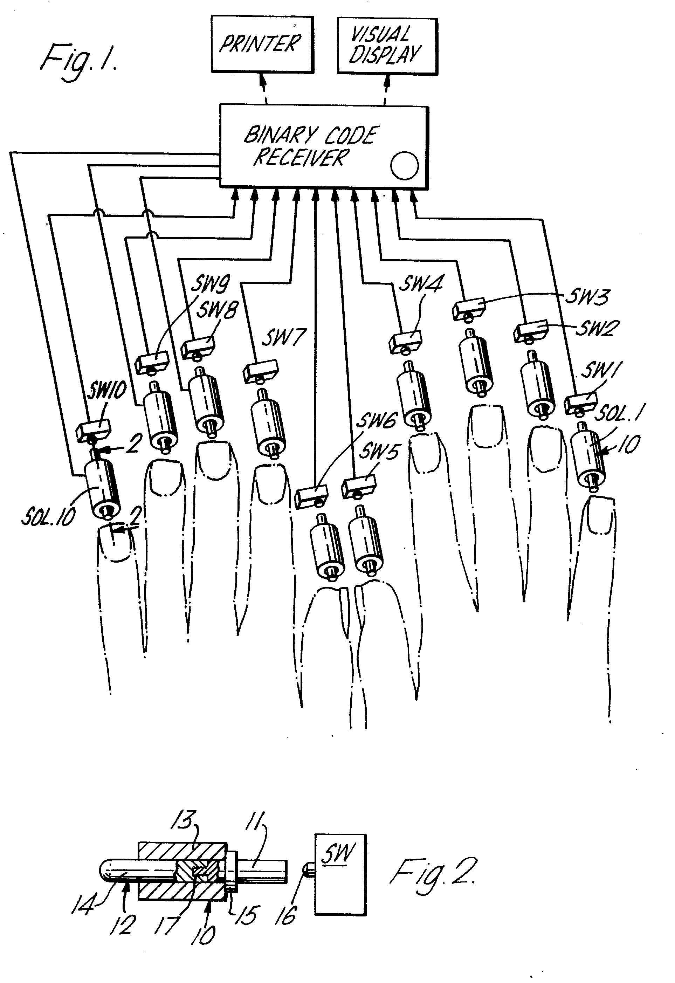

Referring now to the drawings, Figure 2 shows a solenoid 10 in cross-sectional view. An electromagnetic coil 13 encloses an armature 12 having a non-magnetic section 11 and a magnetic section 14. The magnetic section 14 is an iron rod which is drawn into the electromagnetic coil 13 when an electrical current is passed through the coil 13 and thereby generates a magnetic field. When the magnetic section 14 is pulled into the coil 13, the non-magnetic section 11 is forced against the contact 16 on a switch (SW) and closes the switch, which is normally open. A shoulder 15 acts as

- 6 -

a stop and prevents the armature 12 from coming out of the solenoid 10. The magnetic section 14 is attached to the non-magnetic section 11 by means of the threaded post 17 on the non-magnetic section 11. Other fastening means may also be employed.

As shown schematically in Figure 1, each of the fingers of an operator or student is in contact with each armature 12 of a solenoid 10. The contact areas or buttons for the fingers may be incorporated into hand grips or hand rests of any suitable kind. As will be explained below, the armature 12 can be depressed either manually by the operator or student or through the activation of the solenoid 10 electrically by the teaching system. When the armature 12 touches the contact 16, it closes the normally open switch located in that unit which sends a signal to the binary receiver which in turn transmits the signal to other parts of the equipment. There are ten solenoid positions, one for each finger of an operator, and ten switches, each positioned on the armature 12 of a solenoid 10. The ten positions constitute the entire keyboard. The armature 12 is felt as a button under the fingertips of the operator. While the device is shown with ten positions, it is clear that less than ten positions may be used.

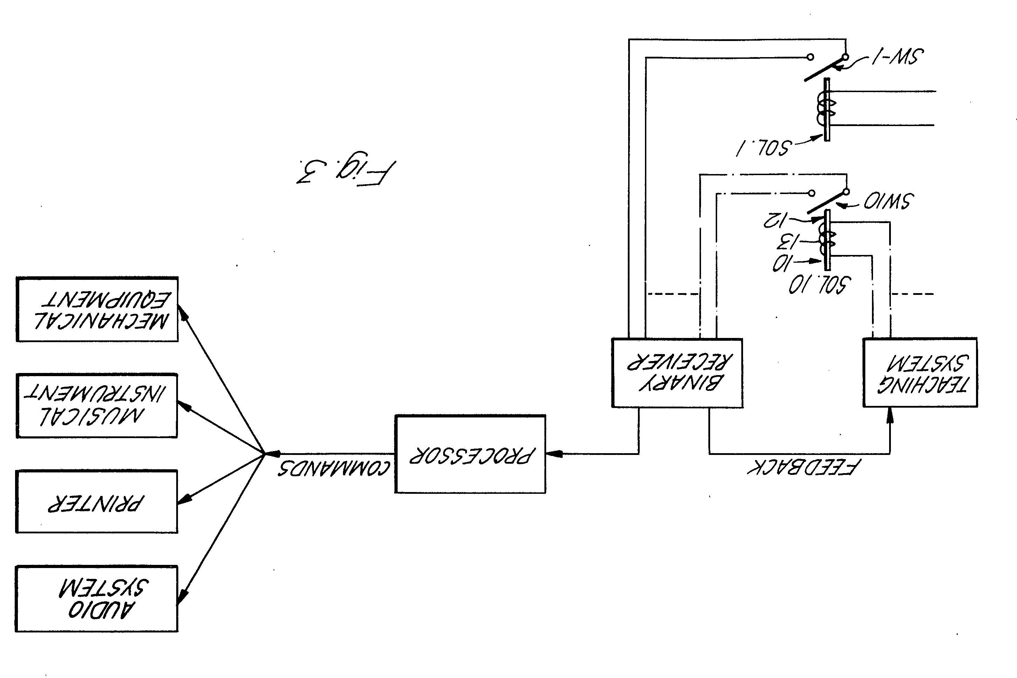

As shown schematically in Figure 3, each switch is connected to both the binary receiver and the teaching system. The binary receiver is a computer programmed to read and respond to each sequence of closed and opened switches. The teaching system can be either a computer or a person who manually manipulates the signal to the solenoid 10.

A particular sequence of opened and closed switches will correspond to a code combination previously programmed and impressed into the binary receiver. The binary receiver receives a particular sequence of opened and closed switches and responds with the commands programmed into the computer. The computer program employed with the binary receiver will contain a code representing all the combinations of switch sequences and a means for comparing the input from the keyboard with the expected response programmed into the binary receiver.

In the teaching mode, the teaching system in Figure 3 is activated and produces a command, for example, to Sol-1. Sol-1 is activated and depresses the armature therein to close the switch SW-1. In this way, one or more of the switches SW-1 to SW-10 will be closed. The student will feel this movement in Sol-1 (and/or the movement or movements in each of Sol-2 to Sol-10 for the other sequences). This command will be transmitted to the processor which will activate a printer and/or audio system with the message which corresponds to the sequence of open and closed switches. The entire system then returns to a neutral mode and the student is required to duplicate the sequence of armature positions previously transmitted to his fingertips with the message to which it corresponds on the printer and/or audio system. Correct duplication of the sequence is noted by the correct message being transmitted on the printer or audio system. Incorrect duplication causes the binary receiver to issue a command to the processor and feedback to the teaching system which causes the printer or audio system to issue a message telling the student that he has erred and the teaching system to repeat the correct sequence on the keyboard. This process is repeated until the student correctly repeats the desired sequence. It is apparent that this system combines both a tactile input to the student with a corresponding visual or audible message and it is this combination of tactile and visual and/or audible inputs to the student which make this teaching system so effective.

The processor issues commands to the device to be activated. In Figure 3, the devices include a number of representative devices. An audio system includes any means for transmitting sound such as horns, loudspeakers, and the like. The printer is any means of putting a message on paper or in sheet form such as the usual computer printer, typewriters, and the like. Musical instruments will include both those with keyboards such as pianos and accordians and those which require for changing the length of the sound path such as clarinets, slide trombone, horns, and the like, the outputs from the finger buttons being decoded and suitably transduced for operating the note-determining features of the instrument. Mechanical equipment includes motor vehicles, such as tractors, cranes, automobiles and the like and also airborn devices such as helicopters and airplanes, in such cases the finger buttons being for example in hand-grips incorporated in controls such as control sticks or control levers or wheels, for the equipment, and decoders and transducers being employed to actuate vehicle functions in response to operations of the buttons.

It is preferred that the sequence of commands embodied in the code be arranged whereby the most frequently used commands are associated with the fingers of greatest dexterity. Thus, for example, in a typewriter connected to the processor, the "space bar", i.e.,

the command to insert a space between letters or words, is the most frequently used command, this function will be allocated to the right thumb. As the letter "E" is the most frequently used letter (in the English language), the left thumb will be used to generate this command. When the first six most frequently used commands have been assigned to the thumb, forefinger and middle finger of each hand, the next command will be assigned to some combination of these fingers, and each such following command in the order of frequency of use until a total of sixty three such individual commands have been assigned. This will exhaust the combinations available to these six fingers in the binary format used. These sixty three commands will cover the large majority of frequently used functions and letters of a standard keyboard. Following this point, additional commands will be assigned to the other four fingers as required.

This approach uses all available sensory inputs to reinforce the learning process. In addition, a suitable level of music may be used as background in view of recent studies suggesting that this approach can enhance the learning process.

The preferred embodiment of the teaching aspect of this invention requires that the exact move-

- 11 -

ment by each finger of the keyboard is first shown to the student, i.e., the exact movement is tactually sensed. It is in this way that the teaching system is a tactile means. Thereafter, the student uses the same tactile means to repeat the learned movement.

0020118

- 1 -

CLAIMS:

1. An apparatus for the generation of a binary code comprising:

(a) a plurality of switches, each switch having two modes;

(b) drive means contained in a keyboard coupled to said switches whereby the switches may be moved from their one mode to the other mode;

(c) a binary code receiver responsive to the two modes of the switches; and

(d) readout means connected to the binary code receiver and connected to equipment whereby the equipment receives and acts on commands transmitted by the binary code receiver.

2. An apparatus as in claim 1 wherein the plurality of switches are ten switches.

3. An apparatus as in claims 1 and 2 wherein the drive means are solenoid switches.

4. An apparatus as in claim 1 wherein the equipment is a visual display device.

5. An apparatus as in claim 1 wherein the equipment is a printer.

6. An apparatus as in claim 1 wherein the equipment is a musical instrument.

7. An apparatus as in claim 1 wherein the equipment is mechanical equipment.

8. A method for operating equipment which comprises:

(a) manipulating a multiplicity of switches in a keyboard having a first and second mode to generate a sequence in which each of the ten switches are either the first or second mode;

(b) transmitting the sequence of switches to a binary code receiver having a programmed response to the sequence transmitted to it;

(c) communicating the programmed response to a programer adapted to command equipment whereby the equipment executes the command transmitted by manipulation of the switches.

- 3 -

9. A method as in claim 8 wherein the equipment is a visual display device.

10. A method as in claim 8 wherein the equipment is a printer.

11. A method as in claim 8 wherein the equipment is a musical instrument.

12. A method as in claim 8 wherein the equipment is mechanical equipment.

13. A method as in claim 8 in which the multiplicity of switches is ten switches.

14. A teaching method which comprises:

(a) placing the fingers of a student on a keyboard having a multiplicity of positions and each position being occupied by a tactile means each of which is coupled to a switch having two modes of operation;

(b) transmitting a first coded signal to the tactile means in each keyboard position with a teaching system whereby each of the tactile means are caused to react into a sequence corresponding to the coded signal and thereby change the mode of each switch associated with the means and also transmit a tactile signal to the fingers of the student;

(c) transmitting the sequence of the switches to a binary code receiver having feedback means to the teaching system and also being connected to a processor connected to equipment;

(d) transmitting a second coded signal from the binary receiver to the processor connected to equipment whereby the message to be taught to the student is communicated visually or audibly;

(e) returning the system to a neutral position and allowing the student to duplicate the previously transmitted sequence of the tactile responsive means;

(f) reviewing the sequence of switches generated by the student; and

(g) evaluating the correctness of the duplication by the student by the binary receiver and either transmitting the correct coded signal to the processor whereby the equipment is operated or transmitting a message that the student has erred and activating the teaching system whereby the student is caused to repeat the sequence of switches until the correct sequence is learned.

15. A method as in claim 14 wherein the tactile responsive means is a solenoid.

16. A method as in claim 14 wherein the multiplicity of positions are 10.

17. A method as in claim 14 wherein the equipment is an audio device or a visual display device.

0020118

1/2

Fig.1.

PRINTER

VISUAL DISPLAY

BINARY CODE RECEIVER

Fig.2.

Fig. 3.

European Patent
Office

**EUROPEAN SEARCH REPORT**

0020118

Application number

EP 80 30 1736

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| D,A | US - A - 3 693 184 (R.G. MALING)  * Claims; figures * | 1,5,8, 10 | G 09 B  13/02          15/08  H 01 H  13/70 |
| A | GB - A - 1 116 812 (CAMBRIDGE CON-SULTANTS LTD.)  * Claims; figures 1-4; page 6, left-hand column, lines 31-47 * | 14 | |
| A | DE - A - 2 263 332 (KLEINWACHTER, J.)  * Claims; figure * | 14 | TECHNICAL FIELDS SEARCHED (Int.Cl. 3) |
| A | US - A - 3 234 664 (B.W. YAEGER)  * Column 2, line 29 - column 7, line 72 * | 14 | G 09 B  13/00          13/02          13/04          15/02          15/04          15/08          21/00          21/04  G 06 F  3/02  H 01 H  13/70 |
| A | GB - A - 1 170 446 (KEE INCORPO-RATED)  * Claims; figure * | 14 | |

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

| | The present search report has been drawn up for all claims | |
|---|---|---|
| Place of search | Date of completion of the search | Examiner |
| The Hague | 02-09-1980 | CARDON |

EPO Form 1503.1   06.78